# EUROPEAN PATENT SPECIFICATION

(11) **EP 1 514 048 B1**
(45) Date of publication and mention of the grant of the patent: **18.03.2009**
(21) Application number: 03757142.9
(22) Date of filing: 05.06.2003
(51) Int. Cl.: F16L 37/12, F16L 47/00, F16L 23/00, F16L 9/12, F16L 11/118, F16L 11/127, H02G 9/06, F16L 25/01, F16L 47/14

(54) **A COUPLING SYSTEM**
VERBINDUNGSSYTEM
SYSTEME DE COUPLAGE

(30) Priority: 05.06.2002 GB 0212858
(43) Date of publication of application: 16.03.2005
(73) Proprietor: Carillion Infrastructure Services Limited, Wolverhampton WV1 4HY (GB)
(72) Inventor: COOKE, Peter, John, Chorley, Lancashire PR6 7SG (GB)
(74) Representative: Ashton, Timothy
(86) International application number: PCT/GB2003/002421
(87) International publication number: WO 2003/104699

(56) References cited:
- EP-A- 0 844 641
- WO-A-98/25064
- DE-A- 2 553 720
- GB-A- 2 135 136
- GB-A- 2 258 767
- US-A- 3 792 878
- US-A- 4 223 922

## Description

The invention relates to a coupling system for coupling together first and second conduits in end-to-end relationship.

Conventional techniques of installing underground power cables involve excavating and preparing a trench which is suitable for the type of cable to be installed, placing the cable into the trench and then backfilling the trench. Typically, local authority rules, regulations and local conditions determine the maximum length in metres and the time duration for the excavation and backfilling operation of the trench. Accordingly, this dictates the spacing between the number of joint bays that are required and, therefore, the number of cable joints required. Typically, these restrictions result in maximum lengths of 500 metres between joints. As the cable joints are expensive, typically approximately £20,000, the cost of the cable joints is a significant factor in the overall cost of the cable installation. There is also the disadvantage that the cable joints are more prone to failure than the cable itself.

In addition, the excavation of the trench must be timed to the delivery of the cable and preparation of the trench includes supporting the trench walls, usually with timber. Calculations indicate that for every 15m of trench supported using 1.5m polling boards, one 15m high tree is required. As it is common for at least 500m of trench to be supported in this way for conventional cable installation, this results in approximately 33 trees being required to supply the timber for the trench.

There is also the disadvantage that if the cable requires replacement, it is necessary to re-excavate the trench to remove the existing cable and install the new cable.

Installation of cables has been performed in some countries by first installing a series of pipes to form a pipeline, and then pulling the cable through the pipeline to install it. This system has the advantage that the pipe can be installed prior to delivery of the cable and as the pipe is generally supplied in shorter lengths, the excavation operations in order to bury the pipe can be over a shorter distance enabling pipes to be installed and backfilled in a single day. This reduces disruption to local residents and road users.

However, there are problems with this system. Typically, the pipes used are formed from a plastics material. Hence, if there is a failure in the cable, the cable does not earth to ground as the pipe insulates it from the ground. This makes it difficult or impossible to locate a fault in the cable using existing techniques and equipment. In addition, it is difficult to ensure alignment between adjoining sections of pipe. If the pipes are misaligned this can have an adverse effect on the cable by the cable snagging within the pipe during installation or being bent around a smaller radius than the cable is designed for.

United States Patent No. 4223922 discloses a coupling system for coupling together first and second conduits in end-to-end relationship, the system comprising a first formation mounted adjacent an end of the first conduit, a second formation mounted adjacent an end of the second conduit, and a coupling means engageable with both the first and second formations to couple the ends of the first and second conduits together

The present invention is characterised by the coupling means being adapted to disengage from at least one of the first and second formations if a misalignment of the axes of the first and second conduits exceeds a predetermined amount.

Preferably, the first and second formations comprise flanges on the respective external side walls of the conduit. Typically, the flanges extend circumferentially around the conduits.

Typically, the formations are adapted to butt against each other.

Preferably, a misalignment in the axes of the conduits exceeding the predetermined amount causes a deformation of the coupling means resulting in the coupling means disengaging from one of the formations.

Preferably, the deformation is an elastic deformation of the coupling means. However, alternatively, the deformation could be a plastic deformation or a deformation resulting in failure or breakage of the coupling means.

Preferably, where the first and second end formations are flanges, the coupling means comprises a U-shaped member adapted to fit over the flanges.

Typically, the end of the first conduit may comprise a male member and the end of the second conduit may comprise a female member, and the male member at the end of the first conduit is adapted to be located within the female member at the end of the second conduit.

Preferably, the male member is a sliding fit into the female member, and typically is inserted by a relative linear movement of the first and second conduits.

Typically, the male member extends between the end of the first conduit and the first formation and typically the second formation is located at the end of the second conduit, and the female member extends from the second formation away from the end such that when the male member is engaged with the female member, the first formation butts against the second formation. Alternatively, the second formation may be located part way along the female member.

Preferably, the coupling system may further comprise a sealing member, the sealing member forming a seal between the male and female members when the male member is inserted into the female member. The sealing member may comprise an elastically deformable member, such as a rubber seal, for example and O-ring seal.

Typically, the sealing member is mounted on one of the female or male members prior to insertion of the male member into the female member.

Preferably the sealing member is mounted on the inside of the female member, and may be located between the end of the female member and the second formation.

Typically, the coupling means is adapted to disengage from the one of the first and second formations when the relative angles between the longitudinal axes of the first and second conduits is greater than10, preferably if the relative angle is greater than 5 , and most preferably, if the relative angle is greater than1.

According to an embodiment of the present invention there is provided a first non-metallic conduit coupled to a second non-metallic conduit with the coupling system defined above, the first and second non-metallic conduits corresponding to the first and second conduits at least as specified in claim 1, comprising electrical conducting means extending between the inner side wall of the conduits and the outer side wall of the conduits.

Typically, the non-metallic conduit is adapted to have an electrically conducting cable, having an outer sheath having an electrically conducting outer surface, inserted therein.

Preferably, the electrical resistance of the electrical conducting means is less than or equal to the electrical resistance of the electrically conducting surface of the outer sheath of the cable to be inserted into the conduit.

In one example of the invention, the electrical conducting means may be provided by a conducting material introduced into the non-metallic material of the conduit, typically during fabrication of the conduit.

Typically, the conducting material may be a semi-conducting material, such as semi-conducting carbon black.

In a second example of the invention, the electrical conducting means may be provided by an electrically-conductive coating applied to an end of the conduit, such that the coating extends from the inner side wall, across the end of the conduit, to the outer side wall.

Typically, where the electrical conducting means comprises a coating, the coating may comprise a colloidal graphite coating.

Examples of a coupling system for a conduit in accordance with the invention will now be described with reference to the accompanying drawings, in which:
Figure 1 shows two lengths of a first example of a pipe coupled together;
Figure 2 is a cross-sectional view along the longitudinal axis of a portion of the pipes shown in Figure 1;
Figure 3 is a cross-sectional view along the line A - A of Figure 2;
Figure 4 shows two lengths of a second example of a pipe coupled together;
Figure 5 shows two lengths of a third example of a pipe coupled together; and
Figure 6 is a cross-sectional view along the longitudinal axis of a portion of the pipes shown in Figure 5.

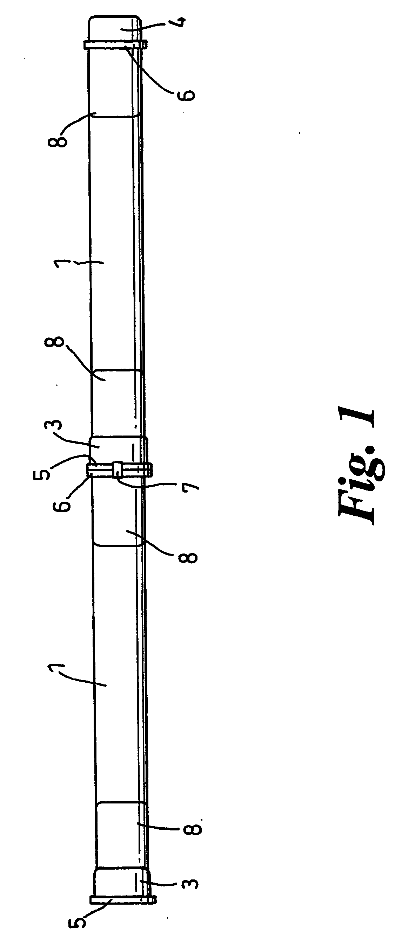

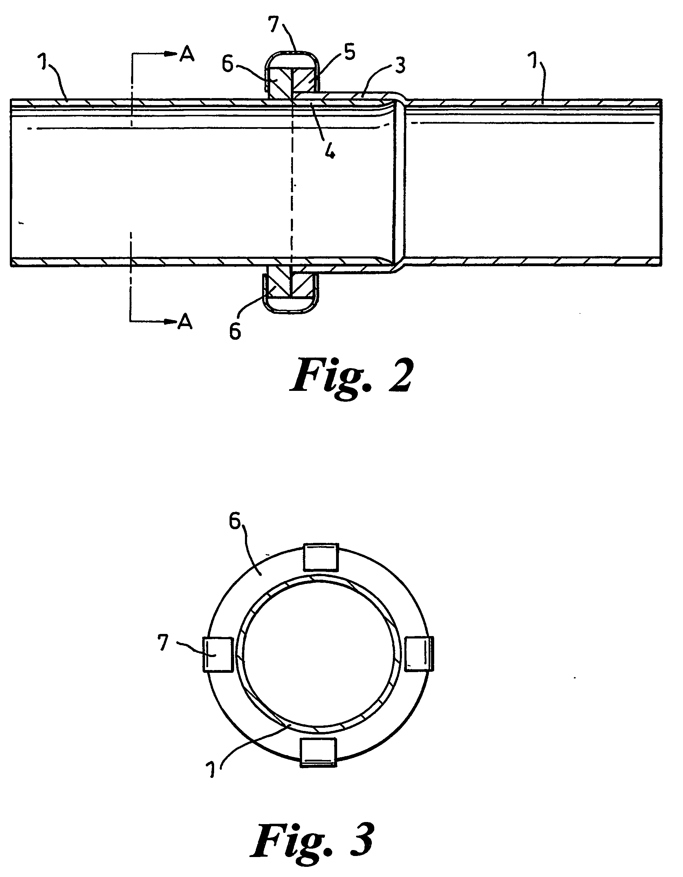

Figure 1 shows two lengths of pipe 1. Each of the pipes 1 has a female end 3 and a male end 4. The male end 4 extends from a flange 6 adjacent to the male end 4 and the female end 3 terminates in a flange 5. As shown in Figure 2, the male end 4 fits within the female end 3 such that the flanges 5, 6 butt against each other. Sprung steel clips 7 are placed over the flanges 5, 6, as shown in Figure 3.

In the event that the pipes 1 are laid such that the longitudinal axes of the pipes 1 are misaligned, the clips 7 are designed such that if the angle of misalignment exceeds a predetermined amount, which may be for example 1°, the clips 7 either break or disengage from the flanges 5, 6. This is caused because a misalignment of the pipes 1 will cause a section of the flanges 5, 6 to separate from each other, thereby expanding at least one of the clips 7 and causing them to either break or disengage from the flanges 5, 6.

The pipes 1 are manufactured from a plastics material, such as PVC. However, the ends 3, 4 of the pipes 1 are coated with a conductive coating 8 which extends across the ends 3, 4 of the pipes 1 and onto both the inner and outer side walls of the pipes 1. Hence, the conductive coatings 8 provide a conductive path between the internal side wall of the pipes 1 and the external side walls of the pipes 1.

In use, the pipes 1 can form part of an underground power cabling system in which first a series of pipes 1 are laid and buried to form a pipeline along the path that the power cable is to follow. After the pipes 1 have been buried, a power cable can then be inserted through the pipes 1 to install the power cable within the pipes 1.

This has advantages over conventional power cable installation systems which generally involve excavating a trench, inserting the power cable into the trench and then backfilling the trench to complete the installation. As discussed above, this conventional system has a number of disadvantages and by installing a pipeline and then inserting the cable into the pipeline reduces or overcomes the disadvantages of this conventional system.

Generally, power cables are provided with an outer sheath which has a conductive coating applied to it. Therefore, an advantage of having the conductive coatings 8 at the ends of the pipes 1 is that if the cable develops a fault, leakage current will be transmitted along the conductive coating on the external surface on the sheath of the cable, and where the sheath of the cable touches the conductive coating 8 on the internal side wall of the pipe 1, the leakage current will pass through the conductive coating from the internal side wall, across the end of the pipe 1 to the external side wall, and then be grounded by the earth surrounding the pipe 1. If some type of conductive path is not provided between the inner and outer side walls of the pipes 1, leakage current would not be grounded because the pipes 1 are electrically insulating.

Therefore, the conductive coatings 8 provide a conductive path from the cable to the ground in which the pipe 1 is buried, and permit conventional power cable fault location equipment to be used to identify the approximate location of the cable fault.

Typically, the conductive coating 8 may be a colloidal graphite coating, which may be applied, for example, by dipping the ends of the pipe 1 in liquid colloidal graphite and then permitting the coating to harden.

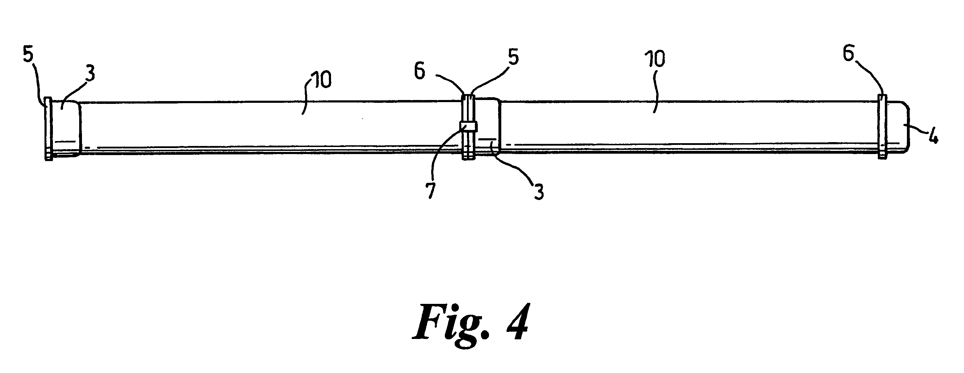

Figure 4 shows a second example of a pipe 10 in which polymeric material from which the pipe 1 is manufactured includes a conductive filler material to establish a conductive path through the side wall of the pipe 1. This can be used as an alternative, or in addition to the conductive coatings 8 to provide an electrically conducting path between the inner and outer side walls of the pipe 2. A suitable filler material may be, for example semi-conducting carbon black.

Apart from the conductive filler material being used to replace the coatings 8, the pipes 10 are the same as the pipes 1, and couple together in the same way.

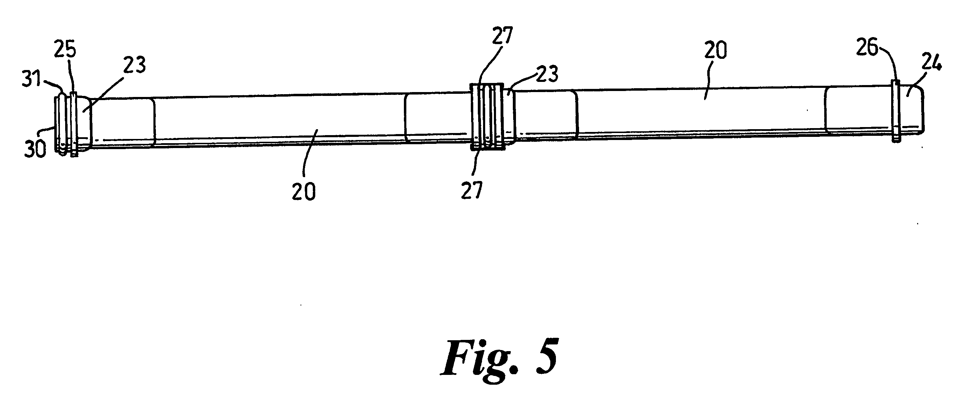

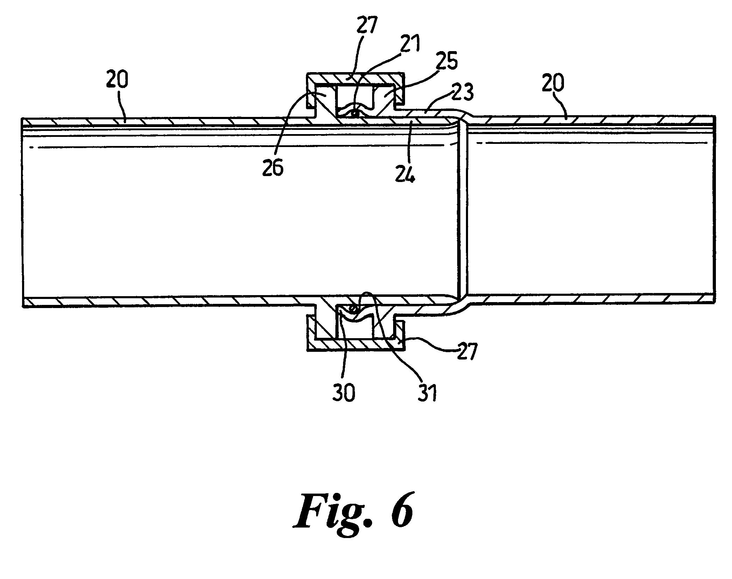

Figure 5 shows two lengths of pipe 20. The lengths of pipe 20 are similar to the lengths of pipe 1, the main difference being the presence of an O-ring seal 21 that acts as a seal at the connection between the pipes 20. Each of the pipes 20 has a female end 23 and a male end 24. The male end 24 extends from a flange 26 adjacent to the male end 24 and the female end 23 includes a flange 25. As shown in Figure 6, the male end 24 fits within the female end 23.

Adjacent to edge 30 of the female end 23, the inside surface of the female end 23 has a recess 31 in which the O-ring seal 21 is seated. As shown in Figure 6, when the male end 24 is inserted into the female end 23, the O-ring seal 21 forms a seal between the inside surface of the female end 23 and the external surface of the male end 24. In addition, when the male end 24 is fully inserted into the female end 23, the flanges 25, 26 are spaced apart from each other and the recess 31 and O-ring seal 21 are located between the flanges 25, 26.

After the male end 24 has been inserted into the female end 23, four sprung steel clips 27 (only two shown) are placed over the flanges 5, 6 as shown in Figure 6. The steel clips 27 have the same function as the steel clips 7 described above and shown in Figures 1-3.

The pipes 20 may be manufactured from the same material as the pipes 1 and also have the conductive coating 8 coated on to the ends 23, 24 of the pipes 20 to provide a conductive path between the internal side wall of the pipes 20 and the external side walls of the pipes 20. The purpose of the conductive coating 8 on the pipes 20 is the same as the purpose of the conductive coating 8 on the pipes 1 and functions in the same manner.

In order to ensure that the conductive coatings 8 of the pipe 1 or the conductivity of the side walls of the pipe 10 are sufficient to permit grounding to occur, the electrical resistance of the coating 8 or the pipe side wall should not be greater than the electrical resistance of the surface of the outer sheath of the cable to be installed in the pipe 1, 10, 20.

## Claims

1. A coupling system for coupling together first and second conduits (1) in end-to-end relationship, the system comprising a first formation (5) mounted adjacent an end (3) of the first conduit (1;10;20), a second formation (6) mounted adjacent an end (4) of the second conduit (1;20), and a coupling means (7) engageable with both the first and second formations (5,6) to couple the ends (3,4) of the first and second conduits together, **characterised by**:
the coupling means (7) being adapted to disengage from at least one of the first and second formations (5,6) if a misalignment of the axes of the first and second conduits exceeds a predetermined amount.

2. A coupling system according to claim 1, wherein the first and second formations (5,6) comprise flanges on the respective external side walls of the conduits (1;10;20).

3. A coupling system according to claim 2, wherein the flanges (5,6) extend circumferentially around the conduits (1;10;20).

4. A coupling system according to any of the preceding claims, wherein a misalignment in the axes of the conduits (1;10;20) exceeding the predetermined amount causes deformation of the coupling means (7) and/or at least one of the first and second formations (5,6), to cause the coupling means (7) to disengage from one of the formations (5,6).

5. A coupling system according to claim 4, wherein the deformation comprises an elastic deformation of the coupling means (7).

6. A coupling system according to any of the preceding claims, wherein the coupling means (7) comprises a U-shaped member adapted to fit over the formation (5,6).

7. A coupling system according to any of the preceding claims, wherein the coupling means (7) is adapted to disengage from the one of the first and second formations (5,6) when the relative angles between the longitudinal axes of the first and second conduits is greater than 10°.

8. A coupling system according to claim 7, wherein the coupling means (7) is adapted to disengage from one of the first and second formations (5,6) when the relative angles between the longitudinal axes of the first and second conduits (1;10;20) is greater than 5°.

9. A coupling system according to claim 8, wherein the coupling means (7) is adapted to disengage from one of the first and second formations (5,6) when the relative angles between the longitudinal axes of the first and second conduits is greater than 1°.

10. A coupling system according to any of the preceding claims, further comprising a sealing member (21), the sealing member (21) forming a seal between the first and second ends when a first end (4)is inserted into a second end (3).

11. A first non-metallic conduit coupled to a second non-metallic conduit with the coupling system according to claim 1, the non-metallic conduits corresponding to the first and second conduits of claim 1, respectively and comprising electrical conducting means (8) extending between the inner side wall of the first and second conduits (1;10;20) and the outer side wall of the conduits.

12. A first non-metallic conduit coupled to a second non-metallic conduit according to claim 11, wherein the non-metallic conduits are adapted to have an electrically conducting cable inserted therein, the electrically conducting cable having an outer sheath having an electrically conducting outer surface.

13. A first non-metallic conduit coupled to a second non-metallic conduit according to claim 12, wherein the electrical resistance of the electrical conducting means is less than, or equal to, the electrical resistance of the electrically conducting surface of the outer sheath of the cable to be inserted into the conduits (1;10;20).

14. A first non-metallic conduit coupled to a second non-metallic conduit according to any of claims 11 to 13, wherein the electrical conducting means (8) comprises a conducting material introduced into the nonmetallic material of the conduits.

15. A first non-metallic conduit coupled to a second non-metallic conduit according to claim 14, wherein the conducting material comprises a semi-conducting material.

16. A first non-metallic conduit coupled to a second non-metallic conduit according to any of claims 11 to 15, wherein the electrical conducting means (8) is provided by an electrically conducted coating (8) applied to an end (3;4) of the conduits (1;10;20) such that the coating (8) extends from the inner side wall across the end of the conduits to the outer side wall.

17. A first non-metallic conduit coupled to a second non-metallic conduit according to claim 14, wherein the electrically conductive coating (8) comprises a colloidal graphite coating.

## Patentansprüche

1. Ein Kopplungssystem zum Aneinanderkoppeln von ersten und zweiten Röhren (1) in End-zu-End-Beziehung, das System umfassend eine erste Struktur (5), die angrenzend an ein Ende (3) der ersten Röhre (1; 10; 20) montiert ist, eine zweite Struktur (6), die angrenzend an ein Ende (4) der zweiten Röhre (1; 20) montiert ist, und ein Kopplungsmittel (7), dass sowohl in die erste als auch in die zweite Struktur (5, 6) eingreifen kann, um die Enden (3, 4) der ersten und zweiten Röhren miteinander zu koppeln, **dadurch gekennzeichnet, dass:**
das Kopplungsmittel (7) dazu angepasst ist, den Eingriff von mindestens einer der ersten und zweiten Strukturen (5, 6) zu lösen, wenn eine Fehlausrichtung der Achsen der ersten und zweiten Röhren einen vorgegebenen Betrag übersteigt.

2. Kopplungssystem gemäß Anspruch 1, wobei die ersten und zweiten Strukturen (5, 6) Flansche auf den jeweiligen äußeren Seitenwänden der Röhren (1; 10; 20) umfassen.

3. Kopplungssystem gemäß Anspruch 2, wobei die Flansche (5, 6) um den Umfang der Röhren (1; 10; 20) verlaufen.

4. Kopplungssystem gemäß einem der vorherigen Ansprüche, wobei eine Fehlausrichtung der Achsen der Röhren (1; 10; 20), die den vorgegebenen Betrag übersteigt, zu einer Deformierung des Kopplungsmittels (7) und/oder von mindestens einer der ersten und zweiten Strukturen (5, 6) führt, was dazu führt, dass das Kopplungsmittel (7) den Eingriff von einer der Strukturen (5, 6) löst.

5. Kopplungssystem gemäß Anspruch 4, wobei die Deformierung eine elastische Deformierung des Kopplungsmittels (7) umfasst.

6. Kopplungssystem gemäß einem der vorherigen Ansprüche, wobei das Kopplungsmittel (7) ein U-förmiges Element umfasst, das dazu angepasst ist, über die Struktur (5, 6) zu passen.

7. Kopplungssystem gemäß einem der vorherigen Ansprüche, wobei das Kopplungsmittel (7) dazu angepasst ist, den Eingriff von einer der ersten und zweiten Strukturen (5, 6) zu lösen, wenn die relativen Winkel zwischen den Längsachsen der ersten und zweiten Röhren größer als 10° sind.

8. Kopplungssystem gemäß Anspruch 7, wobei das Kopplungsmittel (7) dazu angepasst ist, den Eingriff von einer der ersten und zweiten Strukturen (5, 6) zu lösen, wenn die relativen Winkel zwischen den Längsachsen der ersten und zweiten Röhren (1; 10; 20) größer als 5° sind.

9. Kopplungssystem gemäß Anspruch 8, wobei das Kopplungsmittel (7) dazu angepasst ist, den Eingriff von einer der ersten und zweiten Strukturen (5, 6) zu lösen, wenn die relativen Winkel zwischen den Längsachsen der ersten und zweiten Röhren größer als 1° sind.

10. Kopplungssystem gemäß einem der vorherigen Ansprüche, des Weiteren umfassend ein Dichtungselement (21), wobei das Dichtungselement (21) eine Dichtung zwischen den ersten und zweiten Enden bildet, wenn ein erstes Ende (4) in ein zweites Ende (3) eingeführt wird.

11. Eine erste nichtmetallische Röhre, die mit einer zweiten nichtmetallischen Röhre mit dem Kopplungssystem gemäß Anspruch 1 gekoppelt ist, wobei die nichtmetallische Röhre jeweils den ersten und zweiten Röhren gemäß Anspruch 1 entspricht und elektrisch leitende Mittel (8) umfasst, die zwischen der inneren Seitenwand der ersten und zweiten Röhren (1; 10; 20) und der Außenwand der Röhren verläuft.

12. Eine erste nichtmetallische Röhre, die mit einer zweiten nichtmetallischen Röhre gekoppelt ist, gemäß Anspruch 11, wobei die nichtmetallischen Röhren dazu angepasst sind, dass in sie ein elektrisch leitendes Kabel eingeführt wird, wobei das elektrisch leitende Kabel eine äußere Ummantelung hat, die eine elektrisch leitende Außenfläche hat.

13. Eine erste nichtmetallische Röhre, die mit einer zweiten nichtmetallischen Röhre gekoppelt ist, gemäß Anspruch 12, wobei der elektrische Widerstand des elektrisch leitenden Mittels kleiner oder gleich dem elektrischen Widerstand der elektrisch leitenden Oberfläche der äußeren Ummantelung des Kabels ist, das in die Röhren (1; 10; 20) eingeführt werden soll.

14. Eine erste nichtmetallische Röhre, die mit einer zweiten nichtmetallischen Röhre gekoppelt ist, gemäß einem der Ansprüche 11 bis 13, wobei das elektrisch leitende Mittel (8) ein leitendes Material umfasst, das in das nichtmetallische Material der Röhren eingeführt wird.

15. Eine erste nichtmetallische Röhre, die mit einer zweiten nichtmetallischen Röhre gekoppelt ist, gemäß Anspruch 14, wobei das leitende Material ein halbleitendes Material umfasst.

16. Eine erste nichtmetallische Röhre, die mit einer zweiten nichtmetallischen Röhre gekoppelt ist, gemäß einem der Ansprüche 11 bis 15, wobei das elektrisch leitende Mittel (8) durch eine elektrisch leitende Beschichtung (8) bereitgestellt wird, die auf ein Ende (3; 4) der Röhren (1; 10; 20) aufgetragen wird, so dass die Beschichtung (8) von der inneren Seitenwand, über das Ende der Röhren bis zur äußeren Seitenwand verläuft.

17. Eine erste nichtmetallische Röhre, die mit einer zweiten nichtmetallischen Röhre gekoppelt ist, gemäß Anspruch 14, wobei die elektrisch leitende Beschichtung (8) eine Kolloidgraphit-Beschichtung umfasst.

## Revendications

1. Un système de couplage pour coupler ensemble des premier et deuxième conduits (1) dans une relation d'extrémité à extrémité, le système comportant une première formation (5) montée de façon adjacente à une extrémité (3) du premier conduit (1 ; 10 ; 20), une deuxième formation (6) montée de façon adjacente à une extrémité (4) du deuxième conduit (1 ; 20), et un moyen de couplage (7) pouvant se mettre en prise avec à la fois les première et deuxième formations (5, 6) pour coupler les extrémités (3, 4) des premier et deuxième conduits ensemble, **caractérisé par le fait que** :
le moyen de couplage (7) est adapté pour se défaire d'au moins une des première et deuxième formations (5, 6) si un désalignement des axes des premier et deuxième conduits dépasse une quantité prédéterminée.

2. Un système de couplage selon la revendication 1, dans lequel les première et deuxième formations (5, 6) comportent des brides sur les parois latérales externes respectives des conduits (1 ; 10 ; 20).

3. Un système de couplage selon la revendication 2, dans lequel les brides (5, 6) s'étendent de façon circonférentielle autour des conduits (1 ; 10 ; 20).

4. Un système de couplage selon n'importe quelles revendications précédentes, dans lequel un désalignement dans les axes des conduits (1 ; 10 ; 20) dépassant la quantité prédéterminée cause une déformation du moyen de couplage (7) et/ou d'au moins une des première et deuxième formations (5, 6), pour amener le moyen de couplage (7) à se défaire de l'une des formations (5, 6).

5. Un système de couplage selon la revendication 4, dans lequel la déformation comporte une déformation élastique du moyen de couplage (7).

6. Un système de couplage selon n'importe quelles revendications précédentes, dans lequel le système de couplage (7) comporte un membre en forme de U adapté pour s'adapter sur la formation (5, 6).

7. Un système de couplage selon n'importe quelles revendications précédentes, dans lequel le moyen de couplage (7) est adapté pour se défaire de l'une des première et deuxième formations (5, 6) quand l'angle relatif entre les axes longitudinaux des premier et deuxième conduits est supérieur à 10°.

8. Un système de couplage selon la revendication 7, dans lequel le moyen de couplage (7) est adapté pour se défaire de l'une des première et deuxième formations (5, 6) quand l'angle relatif entre les axes longitudinaux des premier et deuxième conduits (1 ; 10 ; 20) est supérieur à 5°.

9. Un système de couplage selon la revendication 8, dans lequel le moyen de couplage (7) est adapté pour se défaire de l'une des première et deuxième formations (5, 6) quand l'angle relatif entre les axes longitudinaux des premier et deuxième conduits est supérieur à 1°.

10. Un système de couplage selon n'importe quelles revendications précédentes, comportant de plus un membre hermétisant (21), le membre hermétisant (21) formant un dispositif hermétique entre les première et deuxième extrémités quand une première extrémité (4) est insérée dans une deuxième extrémité (3).

11. Un premier conduit non métallique couplé à un deuxième conduit non métallique avec le système de couplage selon la revendication 1, les conduits non métalliques correspondant aux premier et deuxième conduits de la revendication 1 respectivement et comportant un moyen conducteur électrique (8) s'étendant entre la paroi latérale interne des premier et deuxième conduits (1 ; 10 ; 20) et la paroi latérale externe des conduits.

12. Un premier conduit non métallique couplé à un deuxième conduit non métallique selon la revendication 11, dans lequel les conduits non métalliques sont adaptés pour avoir un cable électriquement conducteur inséré à l'intérieur d'eux, le cable électriquement conducteur ayant une gaine externe ayant une surface externe électriquement conductrice.

13. Un premier conduit non métallique couplé à un deuxième conduit non métallique selon la revendication 12, dans lequel la résistance électrique du moyen conducteur électrique est inférieure à, ou égale à, la résistance électrique de la surface électriquement conductrice de la gaine externe du cable devant être inséré dans les conduits (1 ; 10 ; 20).

14. Un premier conduit non métallique couplé à un deuxième conduit non métallique selon n'importe lesquelles des revendications 11 à 13, dans lequel le moyen conducteur électrique (8) comporte un matériau conducteur introduit dans le matériau non métallique des conduits.

15. Un premier conduit non métallique couplé à un deuxième conduit non métallique selon la revendication 14, dans lequel le matériau conducteur comporte un matériau semiconducteur.

16. Un premier conduit non métallique couplé à un deuxième conduit non métallique selon n'importe lesquelles des revendications 11 à 15, dans lequel le moyen conducteur électrique (8) est fourni par un revêtement électriquement conducteur (8) appliqué à une extrémité (3 ; 4) des conduits (1 ; 10 ; 20), de telle sorte que le revêtement (8) s'étende de la paroi latérale interne à travers l'extrémité des conduits jusqu'à la paroi latérale externe.

17. Un premier conduit non métallique couplé à un deuxième conduit non métallique selon la revendication 14, dans lequel le matériau électriquement conducteur (8) comporte un revêtement en graphite colloïdal.
